# EUROPÄISCHE PATENTANMELDUNG

(11) **EP 4 651 448 A2**
(43) Veröffentlichungstag der Anmeldung: **19.11.2025**
(21) Anmeldenummer: 25200099.7
(22) Anmeldetag: 17.12.2020
(51) Int. Cl.: H04L 12/40

(54) **VERFAHREN ZUR ABSICHERUNG DER ZEITSYNCHRONISATION IN EINEM SERVER ECU**

(30) Priorität: 20.12.2019 DE 102019220498
(62) Teilanmeldung aus: 20838426.3
(71) Anmelder: AUMOVIO Germany GmbH, 60488 Frankfurt am Main (DE)
(72) Erfinder: Dr. Zinner, Helge, 30165 Hannover (DE)
(74) Vertreter: Aumovio Corporation

(57) **Zusammenfassung**

Ein Verfahren zur Absicherung der Zeitsynchronisation in einem Server ECU is beschrieben, in welchem eine Zeitsynchronisation gemäß einem Zeitsynchronisationsstandard erfolgt. Das Verfahren umfasst: eine Initialisierung der Zeitsynchronisation der Komponenten der Server ECU, wobei eine Komponente der der Server ECU als Grandmaster konfiguriert ist; Speichern einer eindeutigen Uhrenidentifikation einer bei der Initialisierung ermittelten Grandmaster Clock in jedem der Komponenten der Server ECU; Identifikation eines Schatten-Controller, der aus den Komponenten der Server ECU ausgewählt wird; Aussenden von Nachrichten zur Zeitsynchronisation; Abfrage der Versendezeit der ausgesendeten Nachricht zur Zeitsynchronisation beim Schatten Controller; und, Einsatz der Versendezeit bei der Follow-Up-Nachricht durch die Komponente, die die Grandmaster Clock bildet und Weitersenden der Versendezeit.

## Beschreibung

### Feld

Die vorliegende Erfindung betrifft Kommunikationsnetzwerke mit miteinander synchronisierten Netzwerkgeräten.

### Hintergrund

Ethernet-Technologien werden zunehmend in Fahrzeugen eingesetzt und ersetzen dort ältere bzw. proprietäre Datenverbindungen und -busse.

Ethernet-Verbindungen unterstützen auf dem Layer 3 des OSI-Schichtenmodells eine Vielzahl von Vermittlungsprotokollen für die Übertragung von Datenpaketen zwischen Sendern und Empfängern. In den höheren Protokollschichten erfolgt die Segmentierung des Datenstroms in Pakete, die Prozesskommunikation zwischen miteinander kommunizierenden Systemen, die Übersetzung von Daten in eine systemunabhängige Form und schließlich die Bereitstellung von Funktionen für Anwendungen.

Fast alle in Fahrzeugen eingesetzten Ethernet-Kommunikationsnetzwerke nutzen ein Protokoll zur Zeitsynchronisation, das eine in allen Netzwerkgeräten synchrone globale Zeitbasis des Netzwerks bereitstellt. Es wird erwartet, dass der Verbreitungsgrad zeitlich synchronisierter Netzwerkgeräte in Zukunft weiter zunimmt.

Der IEEE 802.1AS-Standard stellt ein solches Protokoll zur Zeitsynchronisation bereit. Ausgehend von einer sogenannten "besten Uhr" im Netzwerk, auch als Grandmaster oder Grandmaster Clock bezeichnet, wird eine Master-Slave-Uhrenhierarchie aufgebaut. Der Grandmaster stellt dabei die Zeitbasis für das Netzwerk bereit, auf die alle anderen Netzwerkgeräte des Netzwerks sich synchronisieren. Der Grandmaster wird mittels des sogenannten Best Master Clock Algorithmus (BMCA) bestimmt und innerhalb des Netzwerks bekanntgegeben. Dazu senden IEEE 802.1AS-fähige Netzwerkgeräte Announce-Nachrichten mit Informationen über ihre interne Uhr an unmittelbar angeschlossene weitere Netzwerkgeräte. Die Informationen über die internen Uhren geben Aufschluss auf die Genauigkeit der jeweiligen Uhr, deren Bezug oder Zeitreferenz sowie andere Eigenschaften, anhand derer die beste Uhr in dem Netzwerk bestimmt werden kann. Ein Empfänger einer solchen Announce-Nachricht vergleicht die empfangenen Informationen mit den Merkmalen seiner eigenen internen Uhr und evtl. bereits von einem anderen Port empfangenen Nachrichten mit Informationen zu Uhren anderer Netzwerkgeräte, und akzeptiert eine in einem anderen Netzwerkgerät befindliche Uhr, wenn diese bessere Uhrenparameter hat. Nach kurzer Zeit ist die beste Uhr in dem Netzwerk ermittelt, die dann der Grandmaster in dem Netzwerk wird. Ausgehend von dem Grandmaster werden Nachrichten zur Zeitsynchronisation über das Netzwerk verbreitet. Ein Netzwerkgerät das eine Nachricht zur Zeitsynchronisation empfängt leitet diese nicht einfach weiter, sondern korrigiert die Zeitinformation um die zuvor ermittelte Laufzeit auf der Verbindung, über die es Nachrichten zur Zeitsynchronisation von einem direkt verbundenen Netzwerkgerät empfängt, sowie um die interne Bearbeitungsdauer, bevor es die Nachricht zur Zeitsynchronisation mit der korrigierten Zeitinformation weitersendet.

Bei der Uhrenhierarchie gemäß IEEE 802.1AS und dem darin festgelegten "generalized precision time protocol" (gPTP) stellt immer nur ein einziges Netzwerkgerät die beste Uhr des Netzwerkes bereit. Dieses Netzwerkgerät steuert und regelt somit die gesamte Zeit des Fahrzeugs. Alle anderen Uhren in Netzwerkgeräten des Netzwerkes richten sich ausschließlich nach dieser einen Uhr. Einige Fahrzeughersteller synchronisieren sogar Netzwerke anderer Standards, bspw. CAN, über diesen Ethernet-Zeitmaster, so dass fast allen Netzwerkgeräten des Fahrzeugs von dem den Grandmaster bereitstellenden Netzwerkgerät die Systemzeit mitgeteilt wird. Dadurch ist in dem Netzwerk bzw. dem Fahrzeug ein einzelnes Netzwerkgerät als Single Point of Failure festgelegt, dessen Ausfall oder Manipulation gravierende Auswirkungen auf die Betriebssicherheit des Fahrzeugs haben kann. So müssen bspw. in Fahrzeugen mit einem hohen Grad an Fahrerunterstützung durch entsprechende Systeme oder mit Systemen für das (Teil-)Autonome Fahren eine Vielzahl von innerhalb eines engen Zeitfensters erfassten Sensordaten gemeinsam verarbeitet werden, um entsprechende Ansteuersignale für Aktoren des Fahrzeugs abzuleiten. Auch für Dokumentationszwecke kann eine möglichst genaue Zeiterfassung von Sensordaten von großer Bedeutung sein, bspw. bei der Speicherung in Log-Dateien, durch deren Analyse Fehlfunktionen oder Fehlbedienungen rekonstruiert werden können. Letzteres ist insbesondere für Versicherungen und Strafverfolgungsbehörden von hohem Interesse. Daher ist eine sichere synchronisierte Bereitstellung der Zeitinformation unverzichtbar.

Die heutigen Verfahren und Protokolle zur Zeitsynchronisation bieten keine einfachen Möglichkeiten zum Schutz des Grandmasters. Jedes Netzwerkgerät kann aus den als einfache Multicast Ethernet-Frames an mehrere oder alle Netzwerkgeräte des Netzwerks gesendeten Nachrichten zur Zeitsynchronisation einfach ableiten, welches Netzwerkgerät in dem Netzwerk der Grandmaster ist. Schutzmechanismen auf höheren Protokollschichten wie etwa IPSEC oder TLS und dergleichen können auf dieser Ebene noch nicht greifen. Durch die in den Nachrichten zur Zeitsynchronisation enthaltene MAC-Adresse des Grandmasters ist es Angreifern leicht möglich, ein Netzwerkgerät als besonders lohnendes Angriffsziel zu identifizieren und vor allem zu lokalisieren, auf das dann Angriffe konzentriert werden können.

Aus dem Stand der Technik sind einige Ansätze zur Erkennung von Änderungen der Konfiguration oder Struktur eines Kommunikationsnetzwerks unter Nutzung der Zeitsynchronisation des Netzwerks bekannt. Eine unautorisierte Änderung der Konfiguration des Netzwerks kann bspw. das Zwischenschalten eines Netzwerkgeräts zur Vorbereitung eines Angriffs umfassen, das Nachrichten zur Analyse abfängt und ggf. veränderte Nachrichten weitersendet. Dies kann dazu genutzt werden, den sicheren und ordnungsgemäßen Betrieb zu verhindern oder zumindest zu stören.

DE 10 2014 200 558 A1 beschreibt einen gesicherten Netzwerk-Zugangsschutz über authentifizierte Zeitmessung. Hierin wird beschrieben wie die Zeitmessung unter Zuhilfenahme von Authentifizierungsprotokollen abgesichert werden soll. Dabei wird entweder eine Laufzeit ermittelt und/oder durch ein zusätzliches Protokoll die Integrität der Zeitsynchronisationsnachrichten validiert. Die Anmeldung kann allerdings nicht erkennen, wenn sich Parameter verändern und ob die Güte der Uhrenparameter wirklich stimmt.

In der DE 10 2012 216 689 B4 wird ein Verfahren zur Überwachung eines Ethernet-basierten Kommunikationsnetzwerks in einem Kraftfahrzeug durch Überwachung der Kommunikationsverbindung zwischen zwei über das Kommunikationsnetzwerk verbundene Netzwerkknoten sowie ein entsprechend eingerichteter Netzwerkknoten beschrieben. Dabei ist vorgesehen, dass die Laufzeit der Signale zwischen Netzwerkknoten des Kommunikationsnetzwerks bidirektional und zyklisch gemessen wird und Änderungen in der Signallaufzeit bewertet werden. Des Weiteren schlägt diese Anmeldung zur Erkennung von Angriffen dieser Art vor, Laufzeiten von Nachrichten zur Zeitsynchronisation innerhalb des Kommunikationsnetzes zu überwachen. Ein zwischen zwei Netzwerkgeräten geschaltetes zusätzliches Netzwerkgerät, das Nachrichten abfängt und weiterleitet, wird die Laufzeit der Nachrichten zwangsläufig verändern, selbst wenn die weitergeleitete Nachricht nicht verändert wird.

In der DE 10 2017 219 209 A1 werden Zeitsynchronisationsnachrichten auf ihre Plausibilität geprüft. Die Schrift offenbart ein Verfahren zum Erkennen eines fehlerhaften Zeitstempels einer Ethernet-Nachricht, bei welchem die Schritte, Empfangen einer Ethernet-Nachricht mit einem Zeitstempel durch eine Steuereinheit eines Kraftfahrzeugs; Bestimmen einer Zeitdifferenz zwischen einer globalen Zeit des Zeitstempels und einer lokalen Zeit einer Uhr der Steuereinheit; und Erkennen des Zeitstempels der Ethernet-Nachricht als fehlerhaft durchgeführt werden. Die globale Zeit des Zeitstempels wird durch die lokale Zeit der Uhr der Steuereinheit ersetzt, falls der Zeitstempel als fehlerhaft erkannt wird.

Bekannt sind auch Ansätze mittels des Zeitsynchronisationsprotokolls zu erkennen, wenn neue Steuergeräte als Mithörer im Bordnetz eingeschleust werden. Es kann allerdings nicht erkannt werden, wenn auf einem bekannten Steuergerät ein Angriff/Fehler passiert.

DE 10 2015 209 047 A1 offenbart ein Verfahren zum Bereitstellen einer Zeitsynchronisation in einem mit einem Audio-Video-Bridging - (AVB) - Ethernet-Kommunikationsnetzwerk verbundenen Knoten. Sie enthält Schritte zum Empfangen statischer Ankündigungsnachrichten von benachbarten Knoten und Bilden einer statischen Grandmaster-Tabelle, Neuauswählen eines Grandmasters mit Verweis auf die statische Grandmaster-Tabelle, wenn ein Synchronisationsnachricht-Timer abläuft, und Aktualisieren der statischen Grandmaster-Tabelle gemäß einer Neuauswahl des Grandmasters. Das Verfahren kann eine Synchronisation in dem Audio-Video-Bridging - (AVB) - Ethernet-Kommunikationsnetzwerk rasch zeitlich abstimmen und eine Netzwerklast minimieren.

Die beste Uhr, der sogenannte Grandmaster, stellt einen "Single Point of Failure" dar. Wenn dieses eine Steuergerät oder dieser eine Controller oder die Implementierung angegriffen werden, dann kann ein Angreifer die gesamte Zeit im Fahrzeug manipulieren. Damit werden beispielsweise die Ausführung von Aktionen, das Fusionieren von Sensordaten als auch das Speichern von Loggingdaten beeinflusst, was zu verheerenden Auswirkungen vom Systemausfall bis hin zum Unfall führen kann. Synchronisationsnachrichten werden per Multicast versendet und sind somit von vielen, wahrscheinlich allen Teilnehmern, empfangbar. Im Hinblick auf das automatisierte Verfahren und den Safety-Anforderungen von ISO26262 stellt das eine sehr schwerwiegende Bedrohung dar.

Keine der bekannten Anwendungen hat sich bislang jedoch mit dem Problem auseinandergesetzt, wie der Grandmaster mit einfachen Mitteln vor Angriffen geschützt werden kann, ohne die grundsätzliche Konformität mit dem IEEE 802.1AS-Standard zu verlieren.

Die Ethernet-basierte Zeitsynchronisation stellt im Fahrzeug einen Single Point of Failure dar, da es zum einen nur einen Zeitmaster gibt und zum anderen an jeder Stelle im Netzwerk identifiziert werden kann, wo sich der Grandmaster genau befindet.

Es ist daher eine Aufgabe der Erfindung, ein Verfahren und ein das Verfahren implementierendes Netzwerkgerät anzugeben, welche die Zeitsynchronisation im Bordnetz absichert.

Diese Aufgabe wird durch das in Anspruch 1 angegebene Verfahren und das in Anspruch 5 angegebene Netzwerkgerät gelöst. Ausgestaltungen und Weiterentwicklungen sind in jeweiligen abhängigen Ansprüchen angegeben.

Das Verfahren zur Absicherung der Zeitsynchronisation in einem Server ECU, in welchem eine Zeitsynchronisation gemäß einem Zeitsynchronisationstandard erfolgt, umfasst eine Initialisierung der Zeitsynchronisation der Komponenten der Server ECU, das Speichern einer eindeutigen Uhrenidentifikation einer bei der Initialisierung ermittelten Grandmaster Clock in jedem der Komponenten der Server ECU, das nicht die zuvor ermittelte Grandmaster Clock bereitstellt, die Identifikation eines Schatten-Controllers, der aus den Komponenten der Server ECU ausgewählt wird; das Aussenden der Synchronisationsnachrichten, das Abfragen der Versendezeit beim Schatten Controller, der Einsatz der Zeit bei der Follow-Up-Nachricht durch den Controller, der die Grandmaster Clock bildet, und Weitersenden der Zeit, das Senden (206) von zusätzlichen Nachrichten zur Zeitsynchronisation durch ausgewählte Netzwerkgeräte, welche nicht die zuvor ermittelte Grandmaster Clock bereitstellen, wobei die in den zusätzlichen Nachrichten zur Zeitsynchronisation gesendeten Zeitinformationen sowie die für eine Ermittlung der besten Uhr mittels BMCA relevanten Uhrenparameter und die Domänennummer mit denen der zuvor ermittelten Grandmaster Clock übereinstimmen bzw. mit diesen vergleichbar sind, und wobei die zusätzlichen Nachrichten zur Zeitsynchronisation eine der Identifikation des jeweiligen ausgewählten Netzwerkgeräts entsprechende eindeutige Uhrenidentifikation enthalten.

Besonders vorteilhaft ist es, wenn die Initialisierung der Zeitsynchronisation in einem sicheren Umfeld ausgeführt wird, in dem ein Angriff mit ausreichend hoher Wahrscheinlichkeit ausgeschlossen werden kann, bspw. am Ende eines Herstellprozesses, durch den ein das abgesicherte Netzwerk enthaltendes Erzeugnis gefertigt wird. Eine einmalige Initialisierung kann vor allem dann genügen, wenn das Netzwerk bzw. dessen Konfiguration sich nach der Initialisierung nicht mehr ändert, bspw. in Fahrzeugen aller Art.

Das erfindungsgemäße Verfahren umfasst ferner das Senden von zusätzlichen Nachrichten zur Zeitsynchronisation durch ausgewählte Netzwerkgeräte, die nicht die zuvor ermittelte Grandmaster Clock bereitstellen, wobei die in den zusätzlichen Nachrichten zur Zeitsynchronisation gesendeten Zeitinformationen sowie die für eine Ermittlung der besten Uhr mittels BMCA relevanten Uhrenparameter und die Domänennummer mit denen der zuvor ermittelten Grandmaster Clock übereinstimmen bzw. mit diesen vergleichbar sind. Die zusätzlichen Nachrichten zur Zeitsynchronisation enthalten jedoch eine eindeutige Uhrenidentifikation, die der Identifikation des jeweiligen ausgewählten Netzwerkgeräts entspricht. Die für die Durchführung des BMCA relevanten Uhrenparameter umfassen insbesondere die Werte für die Variablen priority1, priority2, clockClass, clockAccuracy, offsetScaledLogVariance und timeSource gemäß IEEE 802.1AS-Standard. Jede der von den ausgewählten Netzwerkgeräten gesendeten zusätzlichen Nachrichten zur Zeitsynchronisation scheint also für jeden, der den Netzwerkverkehr abhört, von einer Grandmaster Clock zu stammen, genauso wie die Nachrichten zur Zeitsynchronisation der bei der Initialisierung ermittelten Grandmaster Clock, so dass für den Beobachter eine Vielzahl von Grandmaster Clocks in dem Netzwerk existiert.

Die ausgewählten Netzwerkgeräte senden ihre zusätzlichen Nachrichten zur Zeitsynchronisation vorzugsweise in Zyklen, die denen der bei der Initialisierung ermittelten Grandmaster Clock entsprechen. Jedes der ausgewählten Netzwerkgeräte stellt somit eine Art Pseudo-Grandmaster Clock dar, die sich so verhält, als wäre sie die einzige und auch beste Uhr des Netzwerks. Die Pseudo-Grandmaster Clock ist für einen außenstehenden Beobachter trotz der sich hinsichtlich der Ausbreitung der Nachrichten zur Zeitsynchronisation innerhalb des Netzwerks unterscheidenden Zeitsynchronisationsbäume nicht von der bei der Initialisierung ermittelten Grandmaster Clock unterscheidbar, da die zusätzlichen Nachrichten zur Zeitsynchronisation mit derselben Domänennummer gesendet werden.

Das Senden der zusätzlichen Nachrichten zur Zeitsynchronisation durch die ausgewählten Netzwerkgeräte kann beginnen, sobald an alle Netzwerkgeräte die eindeutige Uhrenidentifikation der bei der Initialisierung ermittelten Grandmaster Clock gesendet wurde. Es ist jedoch auch möglich, das Senden der zusätzlichen Nachrichten zur Zeitsynchronisation erst zu beginnen, wenn eine erste Zeitsynchronisation aller Netzwerkgeräte des Netzwerks abgeschlossen ist.

Jede der zusätzlichen Nachrichten zur Zeitsynchronisation wird von allen Netzwerkgeräten in gleicher Weise standardkonform weitergeleitet, wie die von der bei der Initialisierung ermittelten Grandmaster Clock gesendeten Nachrichten zur Zeitsynchronisation. Das heißt, nach einer Korrektur der Zeitinformation um die Laufzeit auf der Empfangsverbindungsstrecke und die interne Bearbeitungszeit wird eine Nachricht zur Zeitsynchronisation an weitere direkt verbundene Netzwerkgeräte gesendet.

Die Netzwerkgeräte sind miteinander über physikalische Schnittstellen verbunden. Nachrichten zur Zeitsynchronisation werden über für die Schnittstelle definierten logischen Port gesendet, so dass auch bei gemeinsam genutzten physikalischen Übertragungsmedien zwischen zwei Netzwerkgeräten Punkt-zu-Punkt-Verbindungen für die Zeitsynchronisation bestehen. In der vorliegenden Beschreibung wird der Begriff Schnittstelle gleichbedeutend mit dem Begriff Port verwendet, wenn sich aus dem Kontext nichts anderes ergibt.

Eine Identifizierung der bei der Initialisierung ermittelten Grandmaster Clock ist für einen Beobachter, welcher erst nach Abschluss der Initialisierung beginnt, den Netzwerkverkehr abzuhören, durch das erfindungsgemäße Verfahren erheblich erschwert oder sogar unmöglich.

Die Auswahl der Netzwerkgeräte, welche neben der Grandmaster Clock eigene Nachrichten zur Zeitsynchronisation senden und sich dadurch als Grandmaster Clock ausgeben, kann eine Prüfung umfassen, ob ein Netzwerkgerät für den Betrieb des Netzwerks oder eines das Netzwerk enthaltenden Systems unverzichtbar ist, und daher nicht als Köder für einen möglichen Angriff dienen sollte. Unverzichtbare Netzwerkgeräte sind bspw. solche, die mehrere Netzwerksegmente miteinander verbinden, wie z.B. ein Switch, eine Bridge, oder auf denen Funktionen implementiert sind, welche nicht von anderen Netzwerkgeräten übernommen werden können, wie z.B. ein Domänenrechner für das automatisierte oder autonome Fahren oder andere sicherheitsrelevante Funktionen. Solche Netzwerkgeräte werden vorzugsweise nicht ausgewählt. Bei der Auswahl kann auch geprüft werden, ob ein Netzwerkgerät zur Ausführung generischer Funktionen oder Software eingerichtet ist, welche auch von einem anderen Netzwerkgerät innerhalb des Netzwerks ausführbar sind und entsprechend bei Bedarf auf eines dieser anderen Netzwerkgeräte verlagert werden können, bspw. bei einem erkannten Angriff auf ein Netzwerkgerät. Solche Netzwerkgeräte können bevorzugt für das Senden eigener Nachrichten zur Zeitsynchronisation ausgewählt werden, genauso wie Netzwerkgeräte, welche sich am Rand des Netzwerks befinden und/oder nicht sicherheitsrelevante Funktionen bereitstellen und deren Isolierung vom Rest des Netzwerks im Falle eines erkannten Angriffs nicht zu größeren Funktionsstörungen führen würde. Gleiches gilt für Netzwerkgeräte, an welche nur wenige weitere Netzwerkgeräte angeschlossen sind, bspw. Netzwerkgeräte mit nur einem Port und entsprechend nur einem Nachbarn, und die dadurch leichter isoliert werden können. Die Auswahl von Netzwerkgeräten für das Senden eigener Nachrichten zur Zeitsynchronisation kann auch bevorzugt Netzwerkgeräte treffen, die mit besonders starken Sicherheitsmechanismen versehen sind und daher Angriffen besser widerstehen können. In einem einfachen Fall kann die Auswahl von Netzwerkgeräten für das Senden eigener Nachrichten zur Zeitsynchronisation das Auslesen eines Flags umfassen, das bei der Produktion oder Konfiguration des Netzwerkgeräts für den Betrieb in dem Netzwerk gesetzt wurde. Andere Merkmale zur Feststellung, ob ein Netzwerkgerät zum Senden zusätzlicher Nachrichten zur Zeitsynchronisation konfiguriert werden kann, können durch entsprechende Funktionsabfragen ermittelt werden.

Das erfindungsgemäße Verfahren umfasst außerdem in Netzwerkgeräten, die nicht die bei der Initialisierung ermittelte Grandmaster Clock bereitstellen, das Empfangen von Nachrichten zur Zeitsynchronisation an einer ersten Netzwerk-Schnittstelle und eine Prüfung, ob die in der Nachricht zur Zeitsynchronisation übertragene Uhrenidentifikation mit der gespeicherten Uhrenidentifikation der bei der Initialisierung ermittelten Grandmaster Clock übereinstimmt. Falls die Uhrenidentifikationen übereinstimmen wird eine lokale Uhr unter Verwendung der in der Nachricht zur Zeitsynchronisation empfangenen Zeitinformation synchronisiert.

Eine Weiterentwicklung des erfindungsgemäßen Verfahrens umfasst das Überwachen der in zusätzlichen Nachrichten zur Zeitsynchronisation übertragenen Zeitinformationen auf eine Abweichung gegenüber in Nachrichten zur Zeitsynchronisation mit der Uhrenidentifikation der bei der Initialisierung ermittelten Grandmaster Clock übertragenen Zeitinformationen. Solange ein Netzwerkgerät mit der bei der Initialisierung ermittelten Grandmaster Clock synchronisiert ist, kann die dem Vergleich zugrunde liegende Zeitinformation auch von der Uhr des Netzwerkgeräts bereitgestellt sein. Wenn eine Abweichung der Zeitinformation festgestellt wurde, können zusätzliche Nachrichten zur Zeitsynchronisation mit der zugehörigen Uhrenidentifikation blockiert werden, d.h., nicht in das Netzwerk weitergeleitet werden, für die eine Abweichung festgestellt wurde. Sollte die Abweichung die Folge eines Angriffs auf das Netzwerkgerät sein, wird ein Angreifer, der das Netzwerk nur an einer Stelle überwacht, von der Blockierung nichts bemerken, weil Nachrichten zur Zeitsynchronisation nicht von einem Empfänger bestätigt werden. Alternativ kann die in der empfangenen zusätzlichen Nachricht zur Zeitsynchronisation übertragene abweichende Zeitinformation basierend auf von der bei der Initialisierung ermittelten Grandmaster Clock empfangenen Zeitinformationen korrigiert und weitergeleitet werden. Die Basis für die Zeitkorrektur kann auch die mit der bei der Initialisierung ermittelten Grandmaster Clock synchronisierte lokale Uhr sein. Alternativ oder zusätzlich kann eine entsprechende Nachricht an ein zuvor festgelegtes Netzwerkgerät des Netzwerks gesendet werden, welches dazu eingerichtet ist, geeignete Schutzmaßnahmen einzuleiten und/oder zu steuern. Geeignete Schutzmaßnahmen können bspw. eine Isolierung desjenigen Netzwerkgeräts oder einzelner Streams bzw. Nachrichten desjenigen Netzwerkgeräts vom Rest des Netzwerks umfassen, welches die abweichenden Zeitinformationen sendet, oder einen Neustart des betreffenden Netzwerkgeräts.

Eine Ausgestaltung des erfindungsgemäßen Verfahrens umfasst das sporadische oder zyklische Senden von Nachrichten zur Zeitsynchronisation durch die bei der Initialisierung ermittelte Grandmaster Clock, in denen die Zeitinformation von der tatsächlichen Zeit abweicht, und das Überwachen der von den anderen Netzwerkgeräten gesendeten zusätzlichen Nachrichten zur Zeitsynchronisation darauf, ob diese die abweichenden Zeitinformationen entsprechend widerspiegeln. Falls das nicht der Fall ist - unvermeidbare Toleranzen bei der Synchronisierung können dabei unbeachtet bleiben - liegt möglicherweise eine Fehlfunktion oder ein Angriff vor, und das Netzwerkgerät, das die bei der Initialisierung ermittelte Grandmaster Clock bereitstellt, kann eine entsprechende Nachricht an ein zuvor festgelegtes Netzwerkgerät des Netzwerks senden, welches dazu eingerichtet ist, geeignete Schutzmaßnahmen einzuleiten und/oder zu steuern, bspw. das Netzwerkgerät, welches die Änderungen der abweichenden Zeitinformationen nicht widerspiegelt vom Rest des Netzwerks zu isolieren. Falls die von den anderen Netzwerkgeräten gesendeten zusätzlichen Nachrichten zur Zeitsynchronisation die geänderte Zeitinformation widerspiegeln, kann davon ausgegangen werden, dass sich alle Pseudo-Grandmaster Clocks regelkonform verhalten.

Ein erfindungsgemäßes Computerprogrammprodukt enthält Befehle, die bei der Ausführung durch einen Computer diesen dazu veranlassen, eine oder mehrere Ausgestaltungen und Weiterentwicklungen des vorstehend beschriebenen Verfahrens auszuführen.

Der Controller, der die Zeitmasterfunktionalität implementiert hat, muss bestimmte Interrupts bedienen und auch dafür Ressourcen freihalten. Durch die Erfindungsmeldung kann aber nahezu jeder Controller verwendet werden, was wiederum die Systemkosten bzw. Ressourcen senkt.

Den durch das Verfahren bereitgestellten Effekt, nämlich den Schutz gegen unbefugtes Angreifen der Zeitsynchronisation, Verfälschen der Kommunikation und gegen den Austausch von Geräten, kann man auch auf andere Weise und mit noch höherem Sicherheitsniveau erzielen, beispielsweise durch den Einsatz von Hardware-Verschlüsselung (bzw. Authentifizierung). Das Verfahren ermöglicht es, Schutzmechanismen günstiger anzubieten (hilfreich, um Anforderungen nach ISO26262 zu bedienen) und senkt zudem die Systemkosten. Das Verfahren könnte sogar per OTA nachträglich eingespielt werden.

Im Fahrzeug ist es hingegen in der Regel nicht wirtschaftlich, allen, mit dem Netzwerk verbundenen Teilnehmern, für eine lückenlos verschlüsselte Kommunikation ausreichende Hardwareausstattung zu spendieren. Das beschriebene Verfahren setzt deutlich geringere Hardwareressourcen (kann mit vorhandenen Implementierungen umgesetzt werden) voraus und steigert somit das Sicherheitsniveau deutlich, ohne dass dies zwangsläufig mit höheren Herstellungskosten für das Netzwerk oder daran angeschlossene Geräte gekoppelt wäre.

Dieses Verfahren kann insbesondere in Form einer Software implementiert sein, die als Update oder Upgrade zu bestehender Software oder Firmware von Teilnehmern am Netzwerk vertrieben werden kann und insofern ein eigenständiges Produkt darstellt.

In vorteilhafter Weise kann durch die Erfindung die Güte der Ausführung von Software-basierten Anwendungen (z. B. Automatisiertes Fahren) erhöht werden, insbesondere ohne finanziellen Mehraufwand. Mit der Nutzung des neu eingeführten Ethernet-Protokolls im Automobil sind Mechanismen notwendig, die sich einfache Techniken und gegebene Eigenschaften von Technologien zu Nutze machen, um auf teure Implementierungen und weitere zusätzliche Hardware verzichten zu können. Das erfindungsgemäße Netzwerksystem ist im Hinblick auf Kosten und Zuverlässigkeit verbessert.

In vorteilhafter Weise kann durch die Erfindung die Sicherheit eines Fahrzeugnetzwerks signifikant und sehr simpel erhöht werden, insbesondere ohne finanziellen Mehraufwand. Mit der Nutzung des neu eingeführten Ethernet-Protokolls im Automobil sind Mechanismen notwendig, die sich einfache Techniken und gegebene Eigenschaften von Technologien zu Nutze machen, um auf teure Implementierungen und weitere zusätzliche Hardware verzichten zu können. Durch frühzeitigere Erkennung von Angriffen und Fehlverhalten mittels der frühen Analyse der Kommunikationspfade lassen sich Lücken und Fehler vor der Auslieferung des Fahrzeugs erkennen. Das erfindungsgemäße Netzwerksystem ist im Hinblick auf Kosten und Zuverlässigkeit verbessert. Die Testbarkeit des Systems wird durch die Erfindung klarer definiert und dadurch können Testkosten gespart werden. Zudem bietet die Erfindung eine transparente Sicherheitsfunktionalität.

Heute werden Anwendungen meist genau auf nur auf einen Fahrzeugtyp oder Model implementiert, zugeschnitten und angepasst. Mit diesem vorgestellten Verfahren lässt sich die Software flexibler gestalten und Mehrwertdienste aus dem darunter liegenden System generieren, ohne es vorher fix in die Software programmiert zu haben. Wir müssen heute eigentlich vom Worst-Case ausgehen, was Ressourcen (Geld) kostet und Qualität einbüßt. Die Erfindung erlaubt es den Softwareentwicklern und - Architekten eine Software/Anwendung anzubieten, welche flexibler und präziser auf die Anforderungen des Anwendungsfalles zugeschnitten werden kann. Durch den Einbau der genannten Verfahren in Software kann innerhalb des Steuergerätes eine Optimierung erfolgen. Dies bedeutet, dass die Software Plattform- und Fahrzeugtyp unabhängiger gestaltet werden kann.

Die neuen Technologien sind im Automobil nicht mehr aufzuhalten. Protokolle wie IP, AVB und TSN haben mehrere Tausend Seiten an Spezifikationen und Testsuites. Die Beherrschbarkeit dieser neuen Protokolle im Automobil ist nicht direkt gegeben.

Das neue Verfahren kann in ein bestehendes Netzwerk integriert werden, ohne dass vorhandene Geräte zu Schaden kommen. Der Standard wird nicht verletzt, da das vorhandene Protokoll genutzt werden kann.

Der Einsatz des Verfahrens wäre auch möglich für andere Kommunikationssysteme mit Uhrensynchronisationskomponenten und embedded Systemen.

Das Computerprogrammprodukt kann auf einem computerlesbaren Medium oder Datenträger gespeichert sein. Der Datenträger kann physisch verkörpert sein, bspw. als Festplatte, CD, DVD, Flash-Speicher oder dergleichen, der Datenträger bzw. das Medium kann aber auch ein moduliertes elektrisches, elektromagnetisches oder optisches Signal umfassen, das von einem Computer mittels eines entsprechenden Empfängers empfangen und in dem Speicher des Computers gespeichert werden kann.

Ein zumindest erfindungsgemäßes Netzwerkgerät umfasst neben einem Mikroprozessor und nichtflüchtigem und flüchtigem Speicher sowie einem Zeitgeber mindestens eine physikalische Kommunikationsschnittstelle. Die Komponenten des Netzwerkgeräts sind mittels einer oder mehreren Datenleitungen oder -bussen kommunikativ miteinander verbunden. Der Speicher des Netzwerkgeräts enthält Computerprogramminstruktionen, die bei Ausführung durch den Mikroprozessor das Netzwerkgerät dazu einrichten, eine oder mehrere Ausgestaltungen des vorstehend beschriebenen Verfahrens zu implementieren.

Die vorliegende Erfindung schützt den Grandmaster dadurch, dass dessen bislang einfach auffindbare Spur durch eine Vielzahl von falschen Spuren verschleiert bzw. verborgen wird und damit die Position des Grandmasters innerhalb des Netzwerks für Angreifer schwerer zu ermitteln ist. Dann kann der Angreifer gar nicht mehr angreifen, oder er benötigt zumindest erheblich mehr Zeit. Angriffe die nicht zufällig sofort den Grandmaster betreffen können erkannt werden, und es können geeignete Abwehrmaßnahmen ergriffen werden, während das System weiterhin mit der geforderten Genauigkeit synchronisiert bleibt.

Das erfindungsgemäße Verfahren kann mit existierenden Netzwerkgeräten umgesetzt werden, wobei ggf. nur Anpassungen in der Software bzw. der für den Empfang und die Verarbeitung von Nachrichten zur Zeitsynchronisation genutzten Zustandsmaschinen erforderlich sind, um nur die von der bei der Initialisierung ermittelten Grandmaster Clock kommenden Nachrichten zur Zeitsynchronisation für die Synchronisierung der Uhren zu nutzen, die zusätzlichen Nachrichten zur Zeitsynchronisation aber trotzdem weiterzuleiten und nicht einfach zu löschen. Dadurch fallen, wenn überhaupt, für die Umsetzung nur geringe zusätzliche Kosten an. Auch bestehende Systeme können durch entsprechend geänderte Software dazu eingerichtet werden, das Verfahren umzusetzen. Ein weiterer Vorteil des erfindungsgemäßen Verfahrens liegt darin, dass die jeweils zugrundeliegende Hardwareplattform ohne Bedeutung ist, solange diese eine Synchronisierung nach dem IEEE 802.1AS-Standard unterstützen.

### KURZE BESCHREIBUNG DER ZEICHNUNG

Im Folgenden wird die Erfindung mit Bezug auf die Zeichnung exemplarisch erläutert. In der Zeichnung zeigt:
- Fig. 1: ein beispielhaftes Blockschaltbild eines gemäß einem Zeitsynchronisationstandard synchronisierten Netzwerks,
- Fig. 2: das Blockschaltbild des Netzwerks aus Figur 1 während eines Angriffs,
- Fig. 3: ein beispielhaftes Blockschaltbild eines gemäß einem Zeitsynchronisationstandard synchronisierten Netzwerks, welches das erfindungsgemäße Verfahren implementiert,
- Fig. 4: eine erste Darstellung des Blockschaltbilds des Netzwerks aus Figur 3 während eines Angriffs,
- Fig. 5: eine zweite Darstellung des Blockschaltbilds des Netzwerks aus Figur 3 während eines Angriffs,
- Fig. 6: ein schematisches Flussdiagramm eines Aspekts des erfindungsgemäßen Verfahrens,
- Fig. 7a: ein schematisches Blockschaltbild eines das Verfahren implementierenden Netzwerkgeräts,
- Fig. 7b: ein schematisches Blockschaltbild eines das Verfahren implementierenden Netzwerkgeräts, das die Komponenten einzeln darstellt und die Bildung der Zeitinformation als generelle Lösung darstellt,
- Fig. 8: die Adresse des Grandmasters, die in den Synchronisationsnachrichten enthalten ist.

Gleiche oder ähnliche Elemente können in den Figuren mit denselben Bezugszeichen referenziert sein.

### Beschreibung von Ausführungsbeispielen

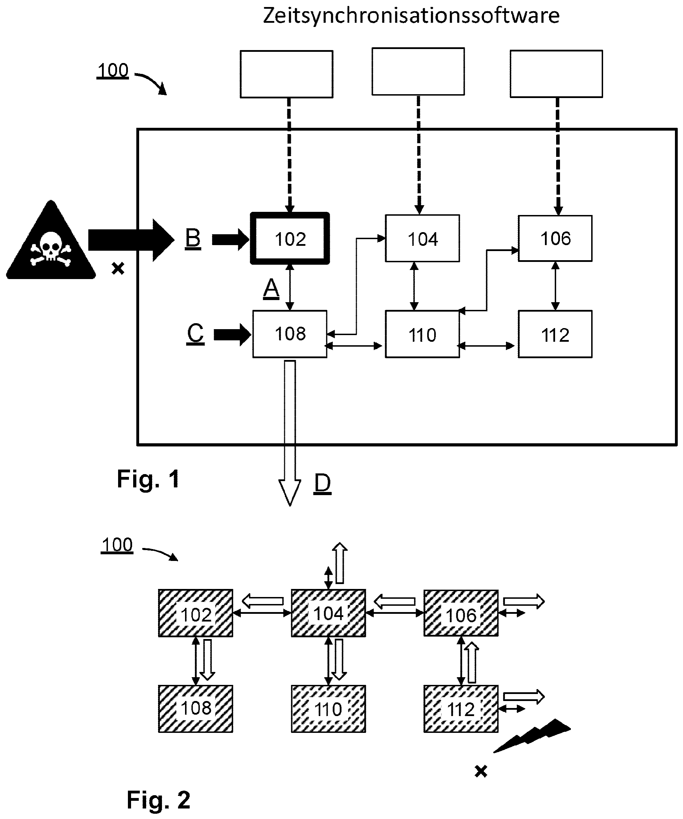

Figur 1 zeigt ein beispielhaftes Blockschaltbild eines gemäß eines Zeitsynchronisationstandards synchronisierten Server ECU 100 mit mehreren mit einer ersten Grandmaster Clock zeitsynchronisierten Netzwerkgeräten 102, 104, 106 und die Switches 108, 110 und 112. Dabei sind jeweils die Controller 102 und Switch 108, Controller 102 und Switch 104, Controller 104 und Switch 110, Controller 104 und Switch 106 sowie Controller 106 und Switch 112 über bidirektionale Kommunikationsverbindungen miteinander verbunden. Der Zugriff erfolgt entweder über Ethernet oder einen anderen Bus wie, MDIO oder SPI. Controller 102, 104 und 106 sind zudem mit weiteren, in der Figur nicht dargestellten Netzwerkgeräten über bidirektionale Kommunikationsverbindungen verbunden. Jede Komponente der Server ECU 102 - 112 hat einen gemäß einem Zeitsynchronisationstandards synchronisierbaren Zeitgeber. Controller 102 ist dabei nach Ausführung des im Standard vereinbarten Ansatzes als Grandmaster Clock für das gesamte System ermittelt worden, d.h., von Controller 102 ausgehend, werden Nachrichten zur Zeitsynchronisation in das Netzwerk gesendet. Dabei sendet Controller 102 Nachrichten zur Zeitsynchronisation z.B. an das mit ihm verbundene Controller 106, sowie an ein weiteres, nicht in der Figur gezeigtes Netzwerkgerät. Die Senderichtung der Nachrichten zur Zeitsynchronisation ist jeweils durch die neben den Kommunikationsverbindungen abgebildeten weiß ausgefüllten Pfeile angedeutet. Switch 108 korrigiert die von dem Controller 108 empfangene Zeitinformation, um die zuvor ermittelte Laufzeit auf der Kommunikationsverbindung zu Controller 102 und die Zeit, die in dem Switch 108 für eine Korrektur und Weiterleitung benötigt wird, und sendet eine entsprechend modifizierte Nachrichten zur Zeitsynchronisation an ein weiteres, nicht in der Figur dargestelltes Netzwerkgerät weiter. Dabei beinhalten die Nachrichten zur Zeitsynchronisation neben der korrigierten Zeitinformation auch Informationen über die Grandmaster Clock des Systems, in diesem Fall Controller 102. Controller 104 verfährt entsprechend und sendet erneut um entsprechende Laufzeiten korrigierte Nachrichten zur Zeitsynchronisation an Switch 110 und 102, sowie an ein weiteres, nicht in der Figur gezeigtes Netzwerkgerät. Wiederum entsprechend sendet Netzwerkgerät 102 eine korrigierte Zeitinformation an den Switch 108. Aufgrund der jeweiligen Korrektur der Zeitinformation vor dem Weiterleiten sind alle Zeitgeber in den Netzwerkgeräten auf die Zeit der Grandmaster Clock synchronisiert, ausgenommen etwaiger verbleibender Restungenauigkeiten aufgrund individueller Abweichungen der Korrekturen der Zeitinformation vor dem jeweiligen Weiterleiten. Die Grandmaster Clock sendet zyklisch Nachrichten zur Zeitsynchronisation in das Netzwerk, die dann wie vorstehend beschrieben weiterverteilt werden.

Das in der Fig. 1 dargestellte X repräsentiert einen Angreifer, der durch Abhören des Netzwerkverkehrs herausfinden will, welches Netzwerkgerät die Grandmaster Clock bereitstellt. Das Abhören ist durch die auf vom Dreieck mit Totenkopf weisenden Pfeil angedeutet. Da in jeder Nachricht zur Zeitsynchronisation die Uhrenidentifikation enthalten ist und außerdem die jeweilige MAC-Adresse des Absenders und des Empfängers, ist es ein Leichtes für den Angreifer, Netzwerkgerät 102 als Grandmaster Clock in dem Netzwerk zu identifizieren und als Angriffsziel auszuwählen. Der das Abhören andeutende Pfeil ist nur als Beispiel zu verstehen - ein Abhören und Angreifen kann an beliebigen Stellen des Netzwerks erfolgen.

Die Erfindungsmeldung schlägt im Verfahren vor, den Grandmaster 102 aus Fig. 1 für Angreifer zu verstecken bzw. unsichtbar zu machen. Dabei schlägt die Erfindungsmeldung vor, dass die Zeitstempelnahme unbedingt, und darauf kommt es an, stabil ist bzw. vom gleichen Knoten stammt und nicht von dem Controller bzw. der Controllersoftware erzeugt wird, dessen Absenderadresse benutzt wird.

Fig. 1 zeigt eine Möglichkeit zur Lösung des oben beschriebenen Problems. Verdeutlicht ist eine Server-ECU 100 bei der mehrere Controller 102, 104, 106 und mehrere Ethernet-Switches 108, 110, 112 integriert sind. Auf jedem dieser Controller läuft eine individuelle Zeitsynchronisationssoftware, wie z.B. PTP, gPTP oder auch 802.1AS. Einer dieser Controller stellt dabei den Grandmaster dar 102. Dieser versendet zwar Zeitsynchronisationsnachrichten A mit seiner Absenderadresse, holt sich die eigentlichen Zeitstempel, respektive die Referenzuhrzeit aber von einem Switch-Baustein 108. Die Zeitsynchronisations-Nachrichten D, die nach außen über das Netzwerk zu Sensoren, anderen Steuergeräten übertragen werden, enthalten stets die von ID (MAC-Adresse oder IP-Adresse) vom Controller 102, aber bekommen den Zeitstempel vom Switch (welcher zu schützen gilt).

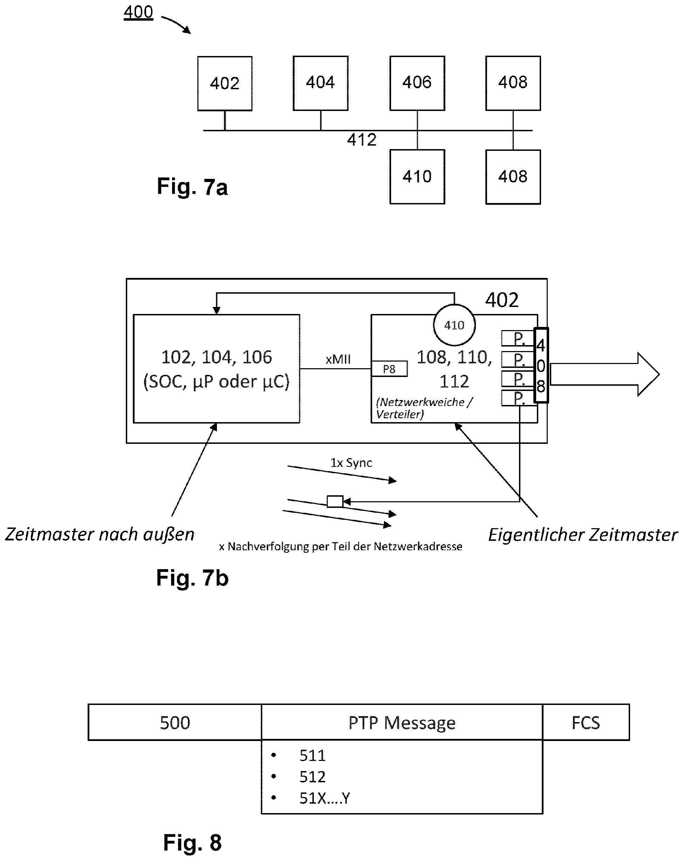

Da die Zeitsynchronisationsnachrichten D per Multicast versendet werden, können sie ziemlich einfach auch von einer fremden oder manipulierten ECU/SW 102, 104, 106 empfangen und interpretiert werden. Die Adresse des Grandmasters steht in der Nachricht, wie es in der Fig. 8 angegeben ist.

Sollte nun ein Angriff auf diesen Controller 102, so wird nicht die eigentliche beste Uhr 102 angegriffen, was der Angreifer X nicht weiß. Es kann nun relativ einfach der Controller 102, 104, 106 gewechselt werden bzw. die ausführende Zeitsyncronisations-Software und mit der gleichen Basis, d.h. gleichem Switch 108, 110, 112 kann die Synchronisation nahtlos fortgesetzt werden. Es wird dadurch keinen Sprung in der Uhrzeit geben. Ein ganzes Steuergerät kann per se auf Netzwerkebene nicht direkt angegriffen werden, da dies aus vielen Einheiten besteht.

Das Verfahren 200 kann entweder immer aktiv sein oder durch einen bestimmten Anwendungsfall ausgelöst worden sein. Dies kann motiviert sein durch den Wechsel in eine höhere Automatisierungsstufe, Safety-Stufe, wenn ein Onlinezugang besteht, oder wenn der Verdacht eines laufenden Angriffs besteht.

Nun wird ein Controller bestimmt von welchem die eigentliche Uhrzeit abgeholt werden soll. Das kann ein Switch 108, 110, 112 sein oder ein anderer Controller 102, 104, 106, mit dem man idealerweise direkt verbunden ist. Der Zugriff erfolgt entweder über Ethernet oder einen anderen Bus wie, MDIO oder SPI.

Nun wird die Zeitsynchronisations-Software im Controller 102 gestartet. Dazu werden Synchronisationsnachrichten an den Schattencontroller 108, der Switch von dem man den Zeitstempel holt, ausgesendet in Form einer Sync-Nachricht. Beim Aussenden dieser Nachricht D vom Switch "Schattencontroller" 108 wird ausgangsseitig ein Hardwarezeitstempel geschrieben z.B. in ein Register und die Nachricht ohne Modifikation versendet. Dabei wird die Absenderadresse des Controllers 102 und nicht des Switches 108 benutzt.

Dann fragt der Controller 102 bei diesem Schattencontroller 108 per Hardwareleitung, oder Ethernet oder SPI dieses Register des jeweiligen Ports ab und nimmt diese Uhrzeit, um sie in eine neu generierte Follow-Up -Nachricht einzusetzen. Diese wird dann an den Schattencontroller 108 (pro Port) geschickt und unverändert ausgesendet.

Selbst wenn der eigentliche Controller 102 nun die Nachrichten in Software generiert hat und die Frames zusammengebaut hat, so stammen sie doch nicht von ihm. Die Synchronisation des Bordnetzes kann mit gleichbleibender Genauigkeit durchgeführt werden.

Figur 2 zeigt das Blockschaltbild der Server ECU 100 aus Figur 1 während eines Angriffs an anderer Stelle. Nachdem der Angreifer den Controller 106 als Grandmaster Clock identifiziert hat, kann er versuchen, den Zeitgeber selbst oder die vom Controller 106 gesendete Nachricht zur Zeitsynchronisation zu manipulieren. Aufgrund der Synchronisation würden alle Netzwerkgeräte die manipulierte Zeitinformation übernehmen, und nach kurzer Zeit wären alle Controller der Server ECU auf eine falsche Zeit synchronisiert, angedeutet durch die Schraffur der die Controller darstellenden Boxen. Bei solch einem Angriff ist es vorgesehen, dass ein anderer Switch zur Zeitinformation herangezogen wird.

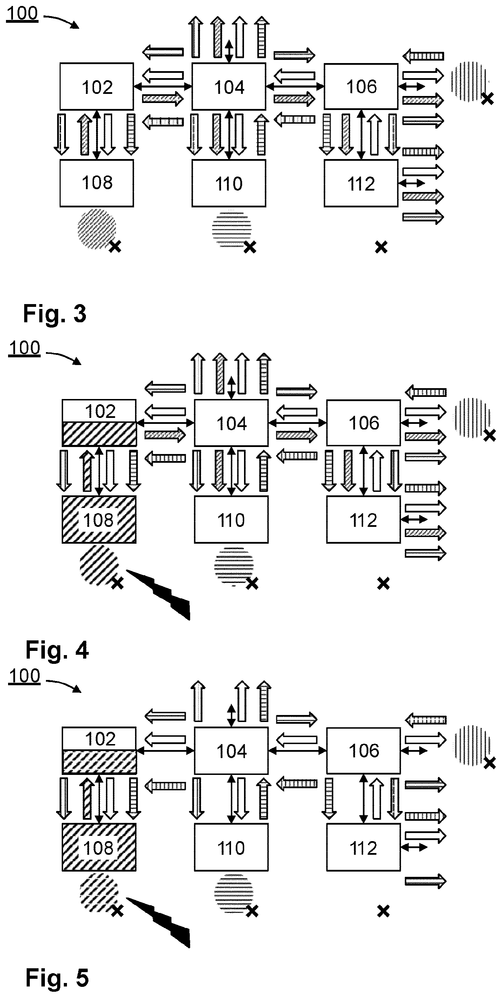

Figur 3 zeigt ein beispielhaftes Blockschaltbild eines gemäß IEEE 802.1AS-Standard synchronisierten Netzwerks 100, welches das erfindungsgemäße Verfahren implementiert. Die Controller und Switches der Server ECU entsprechen denen aus Figur 1 und 2, und wie in Figur 1 ist Netzwerkgerät 112 als Grandmaster Clock festgelegt worden. Switch 112 sendet entsprechende Nachrichten zur Zeitsynchronisation in das Netzwerk, die von den anderen Netzwerkgeräten nach der standardkonformen Korrektur der Zeitinformation weitergeleitet werden, angedeutet durch die weiß ausgefüllten Pfeile. Erfindungsgemäß sind jedoch die Netzwerkgeräte dazu eingerichtet, nach einer Initialisierung der Zeitsynchronisation zusätzliche Nachrichten zur Zeitsynchronisation in das Netzwerk zu senden. Controller 102 und Switch 110 und ein weiteres, in der Figur nicht dargestelltes Netzwerkgerät, senden jeweils zusätzliche Nachrichten zur Zeitsynchronisation mit Uhrenparametern und Zeitinformationen, die denen der Grandmaster Clock gleichen oder entsprechen, jedoch mit ihrer eigenen eindeutigen Uhrenidentifikation. Die von den zusätzlichen Grandmaster Clocks ausgehenden Pfeile, die Nachrichten zur Zeitsynchronisation darstellen, sind entsprechend unterschiedlich schraffiert. Ein Angreifer würde eine Vielzahl von Nachrichten zur Zeitsynchronisation erkennen, die von unterschiedlichen Controllern oder Switches gesendet werden, die aber jede von der Grandmaster Clock zu stammen scheint und dieselbe synchronisierte Zeitinformation enthält. Es ist für den Angreifer dadurch erheblich erschwert herauszufinden, welches Netzwerkgerät bzw. welcher Controller tatsächlich die Grandmaster Clock bereitstellt. Die Auswahl der Controller, die zusätzliche Nachrichten zur Zeitsynchronisation senden, berücksichtigt dabei, dass die Controller möglichst einfach zu isolieren sein sollen, oder Angriffe besonders gut abwehren können.

Fig. 4 zeigt eine erste Darstellung des Blockschaltbilds des Server ECU 100 aus Fig. 3 während eines Angriffs. Der Angreifer hat sich Switch 108 zum Ziel genommen und die in den Nachrichten zur Zeitsynchronisation dieses Netzwerkgeräts enthaltene Zeitinformation verändert, angedeutet durch die fettere diagonale Schraffur des Uhrensymbols, der das Netzwerkgerät repräsentierenden Box und des von dem Netzwerkgerät fortweisenden Pfeils, der die Nachricht zur Zeitsynchronisation darstellt. Controller 102 ist nach wie vor auf die von Switch 112 bereitgestellte Zeit synchronisiert und erkennt, dass die von Netzwerkgerät 108 kommende Nachricht zur Zeitsynchronisation eine falsche Zeitinformation enthält. Somit ist Switch der "Schattencontroller". Es kann jetzt bspw. die in der von Switch 108 kommenden Nachricht zur Zeitsynchronisation enthaltene Zeitinformation anhand seiner eigenen, mit der "echten" Grandmaster Clock synchronisierten Zeit korrigieren und in das Netzwerk senden. Dies ist durch die dünnere diagonale Schraffur der Pfeile angedeutet. Netzwerkgerät 102 kann jedoch auch, wie in Figur 5 dargestellt, von Switch 108 kommende Nachrichten zur Zeitsynchronisation ignorieren und nicht in das Netzwerk weitersenden.

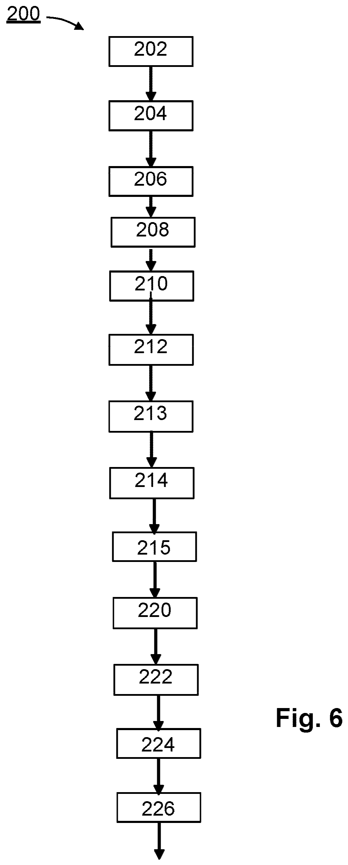

Figur 6 zeigt ein schematisches Flussdiagramm eines Aspekts des erfindungsgemäßen Verfahrens 200. In Schritt 202 erfolgt die Initialisierung der Zeitsynchronisation in grundsätzlich bekannter Weise, bspw. die Durchführung des Best Master Clock Algorithmus, gefolgt vom Speichern der eindeutigen Uhrenidentifikation der bei der Initialisierung ermittelten Grandmaster Clock in Schritt 204. In Schritt 203 erfolgt die Identifikation eines Schatten-Controllers. Schritt 204 kann in jedem Controller des Server ECU ausgeführt werden. Ausgewählte Komponenten der Server ECU, die nicht die zuvor ermittelte Grandmaster Clock bereitstellen senden, in Schritt 206, erfindungsgemäß zusätzliche Nachrichten zur Zeitsynchronisation.

An dieser Stelle kann das Verfahren auf unterschiedliche Arten fortgeführt werden. Im Normalfall werden von nahezu allen Komponenten in Schritt 208 Nachrichten zur Zeitsynchronisation von der bei der Initialisierung ermittelten Grandmaster Clock sowie die in Schritt 206 von den ausgewählten Komponenten gesendeten zusätzlichen Nachrichten zur Zeitsynchronisation empfangen. Die Controller und die Switches, welche selbst Nachrichten zur Zeitsynchronisation senden empfangen ihre eigenen Nachrichten zur Zeitsynchronisation logischerweise nicht. In Schritt 210 prüft jedes Netzwerkgerät, ob eine empfangene Nachricht zur Zeitsynchronisation von der bei der Initialisierung ermittelten Grandmaster Clock, der als Switch 108 bestimmt ist, stammt. Ist dies der Fall, "ja"-Zweig von Schritt 210, synchronisiert der Controller seinen eigenen Zeitgeber in Schritt 212, nachdem er zuvor in Schritt 214 eine Korrektur der Verzögerung auf der Empfangsverbindung vorgenommen. In Schritt 213 erfolgt das Aussenden der Synchronisationsnachrichten. In Schritt 215 erfolgt die Abfrage der Versendezeit beim Schatten Controller (Switch) und in Schritt 216 erfolgt der Einsatz der Zeit bei der Follow-Up-Nachricht und Weitersenden von dem Schattencontroller bzw. dem Switch 102.

Wenn mit dem Controller weitere Komponenten direkt verbunden sind, sendet der Controller eine Nachricht zur Zeitsynchronisation mit der ggf. in Schritt 214 um interne Verzögerungszeiten korrigierten Zeitinformation für den Schritt 216 mit dem gesetzten Inhalt nach Fig. 8 an benachbarte Netzwerkgeräte.

Zusätzlich kann auch in Schritt 220 eine Überwachung auf Abweichung und in Schritt 222 das Weitersenden blockiert werden. In Schritt 224 kann dann Zeitinformation korrigieren und in Schritt 226 die Nachricht D an die anderen Netzwerkgeräte gesendet werden.

Wenn die Nachricht zur Zeitsynchronisation nicht von der bei der Initialisierung ermittelten Grandmaster Clock stammt, korrigiert der Controller die empfangene Zeitinformation in Schritt 214 um die Verzögerung auf der Empfangsverbindung und die bekannte interne Verzögerung, und sendet eine Nachricht zur Zeitsynchronisation mit der korrigierten Zeitinformation in Schritt 216 an benachbarte Komponenten.

Zusätzlich kann in Schritt 220 geprüft werden, ob die in den zusätzlichen Nachrichten zur Zeitsynchronisation empfangene Zeitinformation von der in Nachrichten zur Zeitsynchronisation mit der Uhrenidentifikation der bei der Initialisierung ermittelten Grandmaster Clock übertragenen Zeitinformation abweicht. Wenn dies nicht der Fall ist, braucht nichts weiter unternommen zu werden. Wenn jedoch eine Abweichung erkannt wird, die nicht mit unvermeidlichen Toleranzen bei der Synchronisierung zu erklären ist, kann die Weiterleitung der zusätzlichen Nachricht zur Zeitsynchronisation in Schritt 222 blockiert werden. Alternativ kann die abweichende Zeitinformation in Schritt 224 anhand der Zeitinformation der internen Uhr korrigiert werden, welche mit der bei der Initialisierung ermittelten Grandmaster Clock mit dem Schatten Controller synchronisiert ist, und anschließend nach der Korrektur der Laufzeiten und Verzögerungen in Schritt 216 weitergesendet werden. Alternativ oder zusätzlich kann in Schritt 226 eine Nachricht an ein zuvor festgelegtes Switch oder Controller der Server ECU gesendet werden, welches dazu eingerichtet ist, Schutzmaßnahmen einzuleiten und/oder zu steuern.

Figur 7 zeigt ein exemplarisches Blockdiagramm eines zur Ausführung des erfindungsgemäßen Verfahrens eingerichteten Netzwerkgeräts 400. Das Netzwerkgerät 400 umfasst neben einem Mikroprozessor 402 flüchtigen und nichtflüchtigen Speicher 404, 406, zwei Kommunikationsschnittstellen 408 sowie einen synchronisierbaren Zeitgeber 410. Die Elemente des Netzwerkgeräts sind über eine oder mehrere Datenverbindungen oder -busse 412 kommunikativ miteinander verbunden. Der nichtflüchtige Speicher 406 enthält Programminstruktionen die, wenn sie von dem Mikroprozessor 402 ausgeführt werden, zumindest eine Ausgestaltung des erfindungsgemäßen Verfahrens implementieren.

In Fig. 8 ist abgebildet, wie die Adresse des Grandmasters mit den Synchronisationsnachrichten gebildet wird und welche Information hierin enthalten sind. Ergänzend kann bei einem Angriff durch die Identifikation des Schatten-Controllers (108, 110, 112) eine Mitteilung an die anderen Controller (102, 104, 106) übermittelt werden. Hierdurch kann erkannt werden, ob der Grandmaster angegriffen wird. Ist dies der Fall, erfolgt ein Wechsel des Controllers bei Beibehaltung des Schatten-Controllers. Das Netzwerk und die Sensoren haben trotz des Angriffs keine Einschränkungen, und es tritt kein Zeitsprung auf.

Ausführungsformen der Erfindung können auch durch die folgenden Absätze beschrieben werden:
1. Verfahren (200) zur Absicherung der Zeitsynchronisation in einem Server ECU (100), in welchem eine Zeitsynchronisation gemäß einem Zeitsynchronisationsstandard erfolgt, umfassend:
   - eine Initialisierung (202) der Zeitsynchronisation der Komponenten (102, 104, 106, 108, 110, 112) der Server ECU (100);
   - Speichern (204) einer eindeutigen Uhrenidentifikation einer bei der Initialisierung (202) ermittelten Grandmaster Clock in jedem der Komponenten (102, 104, 106, 108, 110, 112) der Server ECU (100), das nicht die zuvor ermittelte Grandmaster Clock bereitstellt;
   - Identifikation eines Schatten-Controller, der aus den Komponenten (102, 104, 106, 108, 110, 112) der Server ECU (100) ausgewählt wird;
   - Aussenden der Synchronisationsnachrichten (213);
   - Abfrage der Versendezeit beim Schatten Controller (215);
   - Einsatz der Zeit bei der Follow-Up-Nachricht durch den Controller, der die Grandmaster Clock bildet und Weitersenden der Zeit (216);
   - Senden (206) von zusätzlichen Nachrichten zur Zeitsynchronisation durch ausgewählte Netzwerkgeräte, welche nicht die zuvor ermittelte Grandmaster Clock bereitstellen,

   wobei die in den zusätzlichen Nachrichten zur Zeitsynchronisation gesendeten Zeitinformationen sowie die für eine Ermittlung der besten Uhr mittels BMCA relevanten Uhrenparameter und die Domänennummer mit denen der zuvor ermittelten Grandmaster Clock übereinstimmen bzw. mit diesen vergleichbar sind, und
   wobei die zusätzlichen Nachrichten zur Zeitsynchronisation eine der Identifikation des jeweiligen ausgewählten Netzwerkgeräts entsprechende eindeutige Uhrenidentifikation enthalten.
2. Verfahren (200) nach Absatz 1 außerdem umfassend, in Netzwerkgeräten die nicht die bei der Initialisierung (202) ermittelte Grandmaster Clock bereitstellen:
   - Empfangen (208) einer Nachricht zur Zeitsynchronisation an einer ersten Netzwerk-Schnittstelle;
   - Prüfen (210), ob die in der Nachricht zur Zeitsynchronisation übertragene Uhrenidentifikation mit der gespeicherten Uhrenidentifikation der bei der Initialisierung (202) ermittelten Grandmaster Clock übereinstimmt und, falls das zutrifft, Korrigieren (214a) der in der Nachricht zur Zeitsynchronisation empfangenen Zeitinformation entsprechend der gemäß IEEE 802.1AS ermittelten Laufzeiten und Synchronisieren (212) einer lokalen Uhr unter Verwendung der in der Nachricht zur Zeitsynchronisation empfangenen Zeitinformation.
3. Verfahren (200) nach Absatz 2 außerdem umfassend, wenn das Netzwerkgerät zwei oder mehr Schnittstellen aufweist, an die weitere Netzwerkgeräte angeschlossen sind:
   - Korrigieren (214a, 214b) der in der Nachricht zur Zeitsynchronisation empfangenen Zeitinformation entsprechend der gemäß IEEE 802.1AS ermittelten Laufzeiten und/oder geräteinternen Verzögerungen; und
   - Senden (216) einer entsprechend korrigierten Nachricht zur Zeitsynchronisation über eine oder mehrere zweite Netzwerk-Schnittstellen.
4. Verfahren (200) nach einem der vorhergehenden Absätzen außerdem umfassend:
   - Empfangen (208) von Nachrichten zur Zeitsynchronisation an einer ersten Netzwerk-Schnittstelle;
   - Überwachen (220) der in zusätzlichen Nachrichten zur Zeitsynchronisation übertragenen Zeitinformation auf eine Abweichung gegenüber in Nachrichten zur Zeitsynchronisation mit der Uhrenidentifikation der bei der Initialisierung (202) ermittelten Grandmaster Clock übertragenen Zeitinformationen; und
   - Blockieren (222) von zusätzlichen Nachrichten zur Zeitsynchronisation mit der Uhrenidentifikation des Netzwerkgeräts, für die eine Abweichung festgestellt wurde; oder
   - Korrigieren (224) der abweichenden Zeitinformation basierend auf von der bei der Initialisierung ermittelten Grandmaster Clock empfangenen Zeitinformationen vor der Weiterleitung; und/oder
   - Senden (226) einer Nachricht an ein zuvor festgelegtes Netzwerkgerät des Netzwerks, welches dazu eingerichtet ist, Schutzmaßnahmen einzuleiten und/oder zu steuern.
5. Verfahren (200) nach einem der vorhergehenden Absätzen, wobei die bei der Initialisierung (202) ermittelte Grandmaster Clock sporadisch oder zyklisch Nachrichten zur Zeitsynchronisation sendet, in denen die Zeitinformation von der tatsächlichen Zeit abweicht, und wobei das die bei der Initialisierung (202) ermittelte Grandmaster Clock bereitstellende Netzwerkgerät von den anderen Netzwerkgeräten gesendete zusätzliche Nachrichten zur Zeitsynchronisation darauf überwacht (220), ob die zusätzlichen Nachrichten zur Zeitsynchronisation die Abweichungen der Zeitinformationen entsprechend widerspiegeln und wobei, falls nicht, das die bei der Initialisierung ermittelte Grandmaster Clock bereitstellende Netzwerkgerät eine entsprechende Nachricht an ein zuvor festgelegtes Netzwerkgerät des Netzwerks sendet (226), welches dazu eingerichtet ist, Schutzmaßnahmen einzuleiten und/oder zu steuern.
6. Netzwerkgerät (400) umfassend einen Mikroprozessor (402), flüchtigen und nichtflüchtigen Speicher (404, 406), einen synchronisierbaren Zeitgeber (410) und mindestens eine Kommunikationsschnittstelle (408), welche über einen oder mehrere Datenleitungen oder -busse (412) kommunikativ miteinander verbunden sind, wobei das Netzwerkgerät (400) dazu eingerichtet ist, das Verfahren nach einem oder mehreren der Absätzen 1 - 4 auszuführen.
7. Computerprogrammprodukt umfassend Befehle, die bei der Ausführung des Programms durch einen Computer diesen veranlassen, das Verfahren (200) nach einem oder mehreren der Absätzen 1 - 4 auszuführen.
8. Computerlesbareres Medium, auf dem das Computerprogrammprodukt nach Absatz 6 gespeichert ist.
9. Fahrzeug mit einem mehrere Netzwerkgeräte (400) nach Absatz 5 umfassenden Netzwerk.

### Bezugszeichenliste

- 100: Fahrzeugnetzwerk
- 102: SOC, µP oder µC
- 104: SOC, µP oder µC
- 106: SOC, µP oder µC
- 108: Switch
- 110: Switch
- 112: Switch
- 200: Verfahren
- 202: Initialisieren
- 203: Identifikation eines Schatten Controllers
- 204: Speichern
- 206: Senden
- 208: Empfangen
- 210: Uhrenidentifikation prüfen
- 212: Starten der Zeitsynchronisieren
- 213: Aussenden der Synchronisationsnachrichten
- 214: Zeit korrigieren
- 215: Abfrage der Versendezeit beim Schatten Controller (Switch)
- 216: Einsatz der Zeit bei der Follow-Up-nachricht und Weitersenden
- 220: Überwachung auf Abweichung
- 222: Weitersenden blockieren
- 224: Zeitinformation korrigieren
- 226: Nachricht senden
- 400: Netzwerkgerät
- 402: Mikroprozessor
- 404: RAM
- 406: ROM
- 408: Kommunikationsschnittstelle
- 410: Zeitgeber / Clock
- 412: Bus
- 500: Ethernet Header
- 510: PTP Message
- 511: Adresse Grandmasters
- 512: Zeitstempel
- 520: FCS

## Patentansprüche

1. Verfahren (200) zur Absicherung der Zeitsynchronisation in einem Server ECU (100), in welchem eine Zeitsynchronisation gemäß einem Zeitsynchronisationsstandard erfolgt, umfassend:
- eine Initialisierung (202) der Zeitsynchronisation der Komponenten (102, 104, 106, 108, 110, 112) der Server ECU (100), wobei eine Komponente der der Server ECU (100) als Grandmaster konfiguriert ist;
- Speichern (204) einer eindeutigen Uhrenidentifikation einer bei der Initialisierung (202) ermittelten Grandmaster Clock in jedem der Komponenten (102, 104, 106, 108, 110, 112) der Server ECU (100),
- Identifikation eines Schatten-Controller, der aus den Komponenten (102, 104, 106, 108, 110, 112) der Server ECU (100) ausgewählt wird,
- Aussenden von Nachrichten zur Zeitsynchronisation (213);
- Abfrage der Versendezeit der ausgesendeten Nachricht zur Zeitsynchronisation beim Schatten Controller (215);
- Einsatz der Versendezeit bei der Follow-Up-Nachricht durch die Komponente, die die Grandmaster Clock bildet und Weitersenden der Versendezeit (216).

2. Verfahren (200) nach Anspruch 1 außerdem umfassend,
- Senden (206) von zusätzlichen Nachrichten zur Zeitsynchronisation durch ausgewählte Netzwerkgeräte, welche nicht die zuvor ermittelte Grandmaster Clock bereitstellen,
wobei die in den zusätzlichen Nachrichten zur Zeitsynchronisation gesendeten Zeitinformationen sowie die für eine Ermittlung der besten Uhr mittels BMCA relevanten Uhrenparameter und die Domänennummer mit denen der zuvor ermittelten Grandmaster Clock übereinstimmen, und
wobei die zusätzlichen Nachrichten zur Zeitsynchronisation eine der Identifikation des jeweiligen ausgewählten Netzwerkgeräts entsprechende eindeutige Uhrenidentifikation enthalten.

3. Verfahren (200) nach Anspruch 1 außerdem umfassend, in Netzwerkgeräten die nicht die bei der Initialisierung (202) ermittelte Grandmaster Clock bereitstellen:
- Empfangen (208) einer Nachricht zur Zeitsynchronisation an einer ersten Netzwerk-Schnittstelle;
- Prüfen (210), ob die in der Nachricht zur Zeitsynchronisation übertragene Uhrenidentifikation mit der gespeicherten Uhrenidentifikation der bei der Initialisierung (202) ermittelten Grandmaster Clock übereinstimmt und, falls das zutrifft, Korrigieren (214a) der in der Nachricht zur Zeitsynchronisation empfangenen Zeitinformation entsprechend der gemäß IEEE 802.1AS D8.3 und dem darin festgelegten generalized precision time protocol, gPTP, ermittelten Laufzeiten und Synchronisieren (212) einer lokalen Uhr unter Verwendung der in der Nachricht zur Zeitsynchronisation empfangenen Zeitinformation.

4. Verfahren (200) nach Anspruch 3 außerdem umfassend, wenn das Netzwerkgerät zwei oder mehr Schnittstellen aufweist, an die weitere Netzwerkgeräte angeschlossen sind:
- Korrigieren (214a, 214b) der in der Nachricht zur Zeitsynchronisation empfangenen Zeitinformation entsprechend der gemäß IEEE 802.1AS D8.3 und dem darin festgelegten generalized precision time protocol, gPTP, ermittelten Laufzeiten und/oder geräteinternen Verzögerungen; und
- Senden (216) einer entsprechend korrigierten Nachricht zur Zeitsynchronisation über eine oder mehrere zweite Netzwerk-Schnittstellen.

5. Verfahren (200) nach einem der vorhergehenden Ansprüche außerdem umfassend:
- Empfangen (208) von Nachrichten zur Zeitsynchronisation an einer ersten Netzwerk-Schnittstelle;
- Überwachen (220) der in zusätzlichen Nachrichten zur Zeitsynchronisation übertragenen Zeitinformation auf eine Abweichung gegenüber in Nachrichten zur Zeitsynchronisation mit der Uhrenidentifikation der bei der Initialisierung (202) ermittelten Grandmaster Clock übertragenen Zeitinformationen; und
- Blockieren (222) von zusätzlichen Nachrichten zur Zeitsynchronisation mit der Uhrenidentifikation des Netzwerkgeräts, für die eine Abweichung festgestellt wurde; oder
- Korrigieren (224) der abweichenden Zeitinformation basierend auf von der bei der Initialisierung ermittelten Grandmaster Clock empfangenen Zeitinformationen vor der Weiterleitung; und/oder
- Senden (226) einer Nachricht an ein zuvor festgelegtes Netzwerkgerät des Netzwerks, welches dazu eingerichtet ist, Schutzmaßnahmen einzuleiten und/oder zu steuern.

6. Verfahren (200) nach einem der vorhergehenden Ansprüche, wobei die bei der Initialisierung (202) ermittelte Grandmaster Clock sporadisch oder zyklisch Nachrichten zur Zeitsynchronisation sendet, in denen die Zeitinformation von der tatsächlichen Zeit abweicht, und wobei das die bei der Initialisierung (202) ermittelte Grandmaster Clock bereitstellende Netzwerkgerät von den anderen Netzwerkgeräten gesendete zusätzliche Nachrichten zur Zeitsynchronisation darauf überwacht (220), ob die zusätzlichen Nachrichten zur Zeitsynchronisation die Abweichungen der Zeitinformationen entsprechend widerspiegeln und wobei, falls nicht, das das die bei der Initialisierung ermittelte Grandmaster Clock bereitstellende Netzwerkgerät eine entsprechende Nachricht an ein zuvor festgelegtes Netzwerkgerät des Netzwerks sendet (226), welches dazu eingerichtet ist, Schutzmaßnahmen einzuleiten und/oder zu steuern.

7. Netzwerkgerät (400) umfassend einen Mikroprozessor (402), flüchtigen und nichtflüchtigen Speicher (404, 406), einen synchronisierbaren Zeitgeber (410) und mindestens eine Kommunikationsschnittstelle (408), welche über einen oder mehrere Datenleitungen oder -busse (412) kommunikativ miteinander verbunden sind, wobei das Netzwerkgerät (400) dazu eingerichtet ist, das Verfahren nach einem oder mehreren der Ansprüche 1 - 4 auszuführen.

8. Computerprogrammprodukt umfassend Befehle, die bei der Ausführung des Programms durch einen Computer diesen veranlassen, das Verfahren (200) nach einem oder mehreren der Ansprüche 1 - 6 auszuführen.

9. Computerlesbareres Medium, auf dem das Computerprogrammprodukt nach Anspruch 7 gespeichert ist.

10. Fahrzeug mit einem mehrere Netzwerkgeräte (400) nach Anspruch 7 umfassenden Netzwerk.
